# EUROPÄISCHE PATENTSCHRIFT

(11) **EP 0 459 081 B1**
(45) Veröffentlichungstag und Bekanntmachung des Hinweises auf die Patenterteilung: **21.12.1994**
(21) Anmeldenummer: 91101898.4
(22) Anmeldetag: 11.02.1991
(51) Int. Cl.: A61H 23/04

(54) **Ventil**
Valve
Vanne

(30) Priorität: 29.05.1990 DE 4017182
(43) Veröffentlichungstag der Anmeldung: 04.12.1991
(73) Patentinhaber: BÖSL MEDIZINTECHNIK GMBH, D-52068 Aachen (DE)
(72) Erfinder: Bösl, Aloysia, W-5100 Aachen (DE)
(74) Vertreter: Mayer-Pohske, Joachim-Wolfgang Rechtsanwälte Dr. Dettmeier & Partner

(56) Entgegenhaltungen:
- EP-A- 0 163 982
- DE-A- 3 009 408
- DE-U- 8 809 822

## Beschreibung

Die Erfindung betrifft ein Ventil zum successiven Auffüllen von einzelnen Kammern mit einem Fluid, mit einer Ventilgehäuseplatte mit Kanälen und Kanalmündungen in Oberflächenseiten der Ventilgehäuse platte sowie mit mindestens zwei elastischen Membranen zum Abdecken von Kanalmündungen, wobei jede elastische Membran auf ihrer den Mündungen abgewandten Seite mit einem Steuerdruck beaufschlagbar ist, wobei mindestens ein Auslaßkanal vorgesehen ist und wobei noch weitere verbleibende Mündungen weiterer Auslaßkanäle ebenfalls über die mit einem Steuerdruck beaufschlagbare Membran mit einer Einlaßleitung bzw. mit einer benachbarten Mündung verbindbar ist.

Ein Ventil der eingangs beschriebenen Art ist bereits durch die EP-A-0163982 bekannt geworden. Dieses bekannte Ventil hat sich als außerordentlich zuverlässig erwiesen. Obwohl in der Bauart als Rundkörper bevorzugt, ist doch mit der Figur 2 dieser Veröffentlichung auch eine Bauart bekannt geworden, bei der der Ventilkörper plattenförmig ausgebildet ist. Die dort verwendete Membran wurde ebenfalls über eine gesonderte Zuleitung von einem Steuerdruck beaufschlagt. Zur Entlastung der mit dieser Einrichtung aufgefüllten Kammern mußte zunächst der erwähnte Steuerdruck auf den Druck der Umgebungsatmosphäre abgesenkt und anschließend mit einem zusätzlichen Ventil am Ausgang des bekannten Ventiles durch Öffnung dieses Ausganges die gleichzeitige Entleerung aller Kammern vorgenommen werden. Dieses letztgenannte Zusatzventil war erforderlich, weil andernfalls nach Auffüllung der letzten Kammer ständig nachgeliefertes Fluid in die Umgebungsatmosphäre gepumpt worden wäre, was eine unnötige Belastung der Förderleistung der angeschlossenen Pumpen bedeutet hätte. Es muß also nachteiligerweise für jeden Fall einer Entlastung solcher Kammern der Steuerdruck rasch auf Umgebungsdruck abgesenkt und das zusätzliche Entlastungsventil geöffnet werden. Hierdurch ergeben sich unnötig viele Schaltungen und das zusätzliche Entlastungsventil vergrößert den gesamten Bauaufwand der Steuereinrichtung. Durch die Notwendigkeit, dieses zusätzliche Entlastungsventil mit der Steuereinrichtung zu verbinden, wird außerdem der Gesamtaufbau der Einrichtung unhandlich.

Es ist weiter mit dem DE-U 88 09 822 ein geeignetes Entlastungsventil bekannt geworden, das mit der o.gen. Steuereinrichtung des Standes der Technik zusammenwirken kann zum gleichzeitigen Entlasten der von der Steuereinrichtung aufgefüllten Einzelkammern. Auch dieses Entlastungsventil hat sich als außerordentlich zuverlässig erwiesen und es ist sehr einfach in seinem Aufbau.

Ausgehend von dem eingangs beschriebenen Stand der Technik liegt der Erfindung die Aufgabe zugrunde, eine Steuereinrichtung vorzuschlagen, mit der eine gewünschte Anzahl von Kammern oder Kammergruppen successive mit einem Fluid gewünschten Druckes aufgefüllt und diese Kammern in ihrer Gesamtheit oder gruppenweise gleichzeitig entlastet werden können. Eine solche Einrichtung zum Befüllen und Entlasten soll klein bauen und einfach aufgebaut sein. Sie soll einfach in der Herstellung und Montage und einfach in der Handhabung sein. Fehlmontagen, die zur Funktionsunfähigkeit führen, sollen durch die Art des Ventilaufbaus vermieden werden.

Die vorbeschriebene Aufgabe ist ausgehend von einem Ventil der gattungsgemäßen Art dadurch gelöst, daß jeder Auslaßkanal drei an je einer anderen Oberflächenseite der Ventilgehäuseplatte austretende Mündungen aufweist, von denen je eine an zu befüllende und zu entleerende Kammern anschließbar ist, während die weiteren Mündungen jeweils von der elastischen Membran abgedeckt werden und daß weiter mindestens ein Entleerungskanal vorgesehen ist mit einer Auslaßmündung und einer weiteren Mündung, wobei jede dieser weiteren Mündungen und je Auslaßkanal eine weitere Mündung von der gemeinsamen Membran überdeckt werden.
Mit dieser Bauform ist es gelungen das Ventil so auszugestalten, daß es in Baueinheit sowohl die Funktion des successiven Auffüllens als auch die Funktion des gleichzeitigen Entlastens der aufgefüllten Kammern übernimmt. Das gesamte Ventil kann in der beschriebenen Bauausführung außerordentlich klein gehalten werden und ist sehr einfach herstellbar. Es ist möglich mit einem solchen Ventil eine Vielzahl von Kammern successive aufzufüllen und gruppenweise, einzeln oder auch gleichzeitig zu entlasten. Hierbei kann auf einfache Art die Ausbildung des gesamten Ventils so erfolgen, daß sowohl eine Entlastung der Einzelkammern in beliebiger Reihenfolge als auch eine gleichzeitige Entlastung von mehreren Kammern in einer Gruppe oder allen Kammern gleichzeitig möglich ist. Dies wird z.B. dadurch erreicht, daß jeweils eine weitere innere Öffnung, die vom für die Befüllung der Einzelkammern vorgesehenen Auslaßanschluß abgezweigt ist und eine zugehörige Austrittsöffnung zur Entlastung von einem Hohlraum im Ventildeckel auf der diesen Öffnungen abgewandten Seite der Membran überdeckt wird, wobei jedoch jeder solche Hohlraum dann über einen Steuerdruckanschluß verfügen muß. Auf diese Art und Weise kann jede Entlastungsseite einer jeden einzelnen Kammer nach Belieben und in beliebiger Reihenfolge einzeln angesteuert werden. Die Ansteuerung aller Kammern kann auch gleichzeitig erfolgen oder gruppenweise erfolgen, so daß bei der genannten Bauart die aufgefüllten Kammern in jeder beliebigen Reihenfolge (sowohl zeitlich als auch räumlich) entlastet werden können. In der einfachsten Form ist vorgesehen, daß die gesamte Entlastungsseite von dem beschriebenen Hohlraum überdeckt und mit einer für alle gemeinsamen Steuerdruckleitung ausgerüstet ist. Wird dann bei gefüllten Einzelkammern diese einzelne Steuerdruckleitung geöffnet, so daß der Steuerdruck auf den Umgebungsdruck absinkt, so werden sämtliche gefüllten Kammern gleichzeitig entlastet. Hierbei kann es auch möglich sein, eine gemeinsame Steuerdruckleitung sowohl für die Entlastungsseite als auch für die Auffüllseite vorzusehen.

Die erfindungsgemäß einfache Ausbildung dieses Ventils macht eine beliebige Anzahl von Anschlüssen möglich, die auch gruppenweise untereinander geteilt sein können, so daß ein solches Ventil als zentrale Steuereinheit für verschiedene Gruppen von Einzelkammern eingesetzt werden kann. Die genannten Gruppen der Einzelkammern können hierbei wiederum in beliebiger Reihenfolge angesteuert werden. Die einfache Ausbildung der Zwischenlagen macht eine Fehlmontage nahezu unmöglich.

Die Erfindung soll nun anhand eines Ausführungsbeispiels näher erläutert werden.

Es zeigen:
- Figur 1: einen Querschnitt durch ein Ventil längs der Linie III-III nach Figur 3
- Figur 2: einen Querschnitt nach Linie IV-IV in Figur 5
- Figur 3: Ansicht der Ventilgehäuseplatte in Richtung Pfeil A nach Figur 1
- Figur 4: Ansicht wie Figur 3 jedoch in Richtung Pfeil B in Figur 1
- Figur 5: Ansicht einer Ventilgehäuseplatte in Richtung des Pfeils C in Figur 2, um 90° nach links gedreht
- Figur 6: Draufsicht der unteren Zwischenlage aus Figur 1

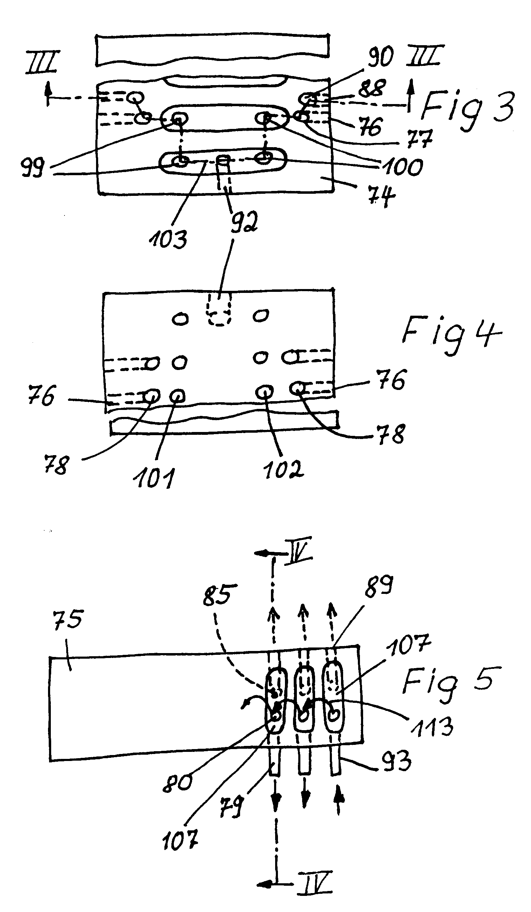

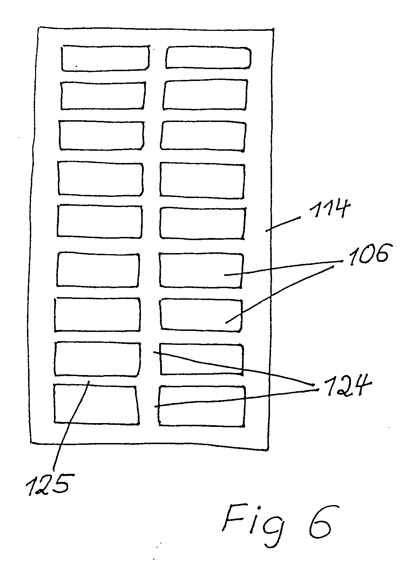

Eine Ausführungsform des erfindungsgemäßen Ventils ist in den Figuren 2 und 5 dargestellt. Das in diesen Figuren dargestellte Ventil besteht im wesentlichen aus einer flachen, prismatischen Ventilgehäuseplatte 75. Auf einer flachen Seite weist die Ventilgehäuseplatte 75 eine Vielzahl von Einsenkungen 107 auf, die nebeneinanderliegend angeordnet sind, wie der Figur 6 entnommen werden kann. Hierbei ist für jeden Auslaßkanal 73 eine solche Einsenkung 107 vorgesehen. Eine weitere Einsenkung 107 ist vorgesehen für die Einlaßleitung 93.

Von der Oberflächenseite, die die Einsenkung 107 aufweist, ist durchgehend zur gegenüberliegenden Oberflächenseite in jeder Einsenkung 107 eine durchgehende Bohrung 108 eingebracht. Von der Seite der Ventilgehäuseplatte 75 ist jeweils senkrecht zu jeder Bohrung 108 ein Auslaßkanal 73 durchgehend bis zur Bohrung 108 eingebracht. Jeder dieser Auslaßkanäle 73 kann mit einer zu befüllenden oder zu entleerenden Kammer 39 verbunden sein. Hiervon ausgenommen ist lediglich die erste Einsenkung 107, deren Bohrung 108 ebenfalls mit einer weiteren senkrecht hierzu verlaufenden Bohrung ausgestattet ist, die jedoch als Einlaßleitung 93 Verwendung findet.

Die Bohrungen 108 münden einerseits mit ihrer Mündung 80 in der Einsenkung 107 und mit ihrer Mündung 81 auf der Rückseite der Ventilgehäuseplatte 75. Ebenfalls auf der Rückseite der Ventilgehäuseplatte 75 mündet in einem seitlichen Abstand zur Mündung 81 eine weitere Mündung 91, die zu einem Entleerungskanal 87 gehört, dessen zweite Mündung an einer Seite der Ventilgehäuseplatte 75 mit der Auslaßmündung 89 austritt.

Die Rückseite der Ventilgehäuseplatte 75 ist auf ihrer ganzen Fläche belegt mit einer elastischen Membran 85, die gehalten wird von einem Deckel 109. Zwischen Deckel 109 und elastischer Membran 85 befindet sich jedoch noch eine Zwischenlage 97 in Form eines umlaufenden Dichtrandes. Hierdurch entsteht zwischen der Deckelunterseite des Deckels 109 und der Membran 85 ein kleiner Hohlraum, der über die Leitung 110 mit Druckmedium beaufschlagbar ist.

Auf der gegenüberliegenden Seite der Ventilgehäuseplatte 75 ist ebenfalls die gesamte Ventilgehäuseplatte 75 abgedeckt mit einer elastischen Membran 84, auf der wiederum eine Zwischenlage 96 angeordnet ist, die in Form und Abmessung der Zwischenlage 97 gleich sein kann. Auf der Zwischenlage 96 ist wiederum ein Deckel 111 angeordnet, mit dem die Membran 84 festgeklemmt werden kann, so daß wiederum zwischen Membran 84 und Deckelunterseite ein Kleiner Hohlraum entsteht, der über die Leitung 112 wiederum mit Druckmedium beaufschlagt werden kann.

Um die anschließbaren Kammern 39 mit Hilfe dieser Ventilbauart zu füllen wird einfach das gewünschte Druckmedium über die Einlaßleitung 93 eingeblasen. Nach Erreichen eines bestimmten Druckes, der von der Druckbeaufschlagung der Membran 84 mit Steuerdruck abhängt, kann von diesem eingeblasenen Druck die Membran 84 an der Einlaßstelle hochgehoben werden, so daß das Druckmedium in Richtung des Pfeils 113 in Figur 5 zur nächsten Einsenkung 107 weiterwandern kann und dort über den Auslaßkanal 73 mit der zugehörigen Mündung 79 in eine zugeordnete Kammer 39 abfließen kann. Ist in dieser Kammer 39 wiederum ein entsprechender Druck erreicht, so kann in der zugeordneten Einsenkung 107 die Membran 84 wieder angehoben werden, so daß nun das Druckmedium wieder in Pfeilrichtung der Pfeile 113 weiterwandern und die nächste Kammer befüllen kann.

Damit das über die Einlaßleitung 93 eingepumpte Druckmedium nicht ungewollt abfließen kann, ist die Membran 85 auf der Unterseite des Ventils (Fig.2) ebenfalls über die Leitung 110 mit einem entsprechenden Steuerdruck beaufschlagt, so daß die Membran die Mündungen 81 und 91 dicht verschließt. Sollen nun nach einem Auffüllvorgang die Kammern 39 alle gemeinsam entleert werden, so wird der über die Leitung 110 eingelassene Steuerdruck entsprechend abgesenkt oder gar zu Null gemacht, so daß nunmehr vom Überdruck in den Kammern 39 die Membran 85 abgehoben werden kann, worauf das Druckmedium über die Mündung 81 zur Mündung 91 und dadurch über den Entleerungskanal 87 abfließen kann, der mit seiner Auslaßmündung 89 z.B. mit der Umgebungsatmosphäre verbunden sein kann.

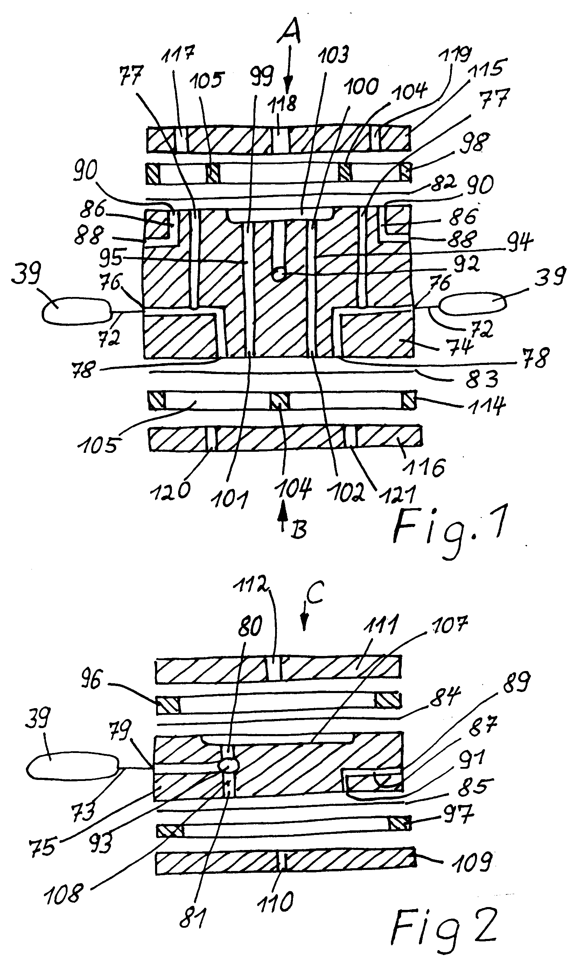

In Figur 1 mit den zugehörigen Figuren 3, 4 und 6 ist eine Bauvariante des erfindungsgemäßen Ventils dargestellt, die auf engstem Raum die doppelte Anzahl von Auslaßkanälen zuläßt wie die soeben beschriebene Ausführungsform. Hierdurch wird es möglich, z.B. sämtliche Kammern eines Beinmanschettenpaares gleichzeitig zu bedienen und hierbei dennoch diese Kammern in unterschiedlicher Reihenfolge sowohl einzeln als auch manschettenweise oder gruppenweise zu befüllen und zu entleeren. Trotz der außerordentlich kompakten Bauweise, kann jede vollständige Manschette eines solchen Manschettenpaares, bspw. eines Beinmanschettenpaares, gesondert und unabhängig angesteuert werden.
Auch das Ventil nach Figur 1 besteht in seinen wesentlichen Bauteilen wieder aus einer flachen, prismatischen Ventilgehäuseplatte 74, die auf ihren flachen, sich gegenüberliegenden Seiten jeweils wieder vollständig abgedeckt ist mit je einer elastischen Membran 82 und 83. Auf der Membran 82 ist eine Zwischenlage 98 und auf der Membran 83 eine Zwischenlage 114 aufgesetzt. Auf die Zwischenlage ist dann jeweils ein Deckel 115 bzw. 116 aufgesetzt, mit denen das gesamte Ventil zusammengehalten wird, wie dies bereits zu den Figuren 1 und 2 beschrieben wurde.

Die Ventilgehäuseplatte 74 weist wiederum eine Anzahl von Einsenkungen 103 auf, die in Anordnung und Funktion den Einsenkungen 107 nach Figur 2 und 5 entsprechen. In jede dieser Einsenkungen 103 ist im seitlichen Abstand zueinander eine durch die Ventilgehäuseplatte 74 hindurchgehende Bohrung 94 bzw. 95 eingebracht. Lediglich in der ersten Einsenkung der Einsenkungen 103 ist eine weitere, nicht näher bezeichnete Bohrung mittig angebracht, die nicht ganz durch die Ventilgehäuseplatte 74 hindurchgeht, sondern zu einer Stirnseite dieser Ventilgehäuseplatte 74 führt und dort mit einer Einlaßleitung 92 verbunden ist.
Beidseitig an den schmalen Stirnseiten der Einsenkungen 103 ist eine der Anzahl der zu befüllenden Kammern 39 entsprechende und damit beliebige Anzahl von weiteren Bohrungen eingebracht, die jeweils einander zugeordnet sind. So gehört jeweils zueinander ein Entleerungskanal 86 mit seinen Mündungen 90 und 88 sowie ein Auslaßkanal 72 mit seinen Mündungen 76, 77 und 78. Hierbei werden einerseits die Mündungen 90, 77 sowie die Einsenkung 103 und damit auch die Mündungen 99 und 100 von der gemeinsamen Membran 82 und andererseist die Mündungen 78 und 101 und 102 von einer gemeinsamen Membran 83 abgedeckt.

Die Zwischenlage 98 bildet einerseits einen rundum umlaufenden Rand und weist andererseits zwei parallel zueinander in einem Abstand in Längsrichtung verlaufende Zwischenstege 104 und 105 auf, so daß drei unabhängige und den Anschlüssen 117, 118 und 119 zugeordnete Kammern entstehen, durch die die Membran 82 mit Druckmedium mit unterschiedlichen Drücken beaufschlagt werden kann. Hierbei überdeckt die Kammer, die dem Anschluß 117 zugeordnet ist, sämtliche Mündungen 77 und 90. Gleiches gilt für die gegenüberliegende Kammer, die dem Anschluß 119 zugeordnet ist. Die Kammer, die dem Anschluß 118 zugeordnet ist, überdeckt den gesamten Bereich der Einsenkungen 103.

Die Zwischenlage 114 weist eine völlig andere Form auf, als die Zwischenlage 98, die soeben beschrieben wurde. Die Zwischenlage 114 ist gesondert dargestellt in Figur 6. Die Zwischenlage 114 ist durch den nicht näher bezeichneten rundumlaufenden Steg und den Zwischensteg 124 zunächst in zwei längsgerichtete Kammern unterteilt. Diese längsgerichteten durchgehenden Kammern sind wiederum unterteilt in eine Vielzahl von Einzelkammern durch die Querstege 125. Hierdurch ensteht eine Vielzahl von Einzelkammern 106. Jede Einzelkammer überdeckt hierbei jeweils ein Mündungspaar bestehend aus den Mündungen 78 und 101 bzw. auf der anderen Seite 78 und 102. Jede dieser Kammern 106 kann über die im Deckel 116 vorhandenen und zugeordneten Anschlüsse 120 bzw. 121 mit einem gewünschten Steuerdruck beaufschlagt werden.

Sollen mit einem Ventil nach Figur 1 nun wiederum beidseitig Kammern 39 gefüllt werden, so wird das Druckmedium zunächst über den Anschluß 92 eingeblasen und erreicht damit zunächst die erste Einsenkung 103. Dort verteilt sich das Druckmedium über die Bohrungen 94 und 95 bis zu den Mündungen 101 und 102, die von der Membran 83 abgedeckt sind. Diese Membran 83 kann in der dort zugehörigen Kammer 106 angehoben werden, wobei dort dennoch das Druckmedium nicht weiter kann, weil, wie in Figur 3 zu sehen ist, den ersten Mündungen 101 und 102 der ersten Einsenkung 103 keine weiteren Bohrungen zugeordnet sind. Bei entsprechendem Druckanstieg wird daher die über die Leitung 118 mit entsprechendem Steuerdruck beaufschlagte Membran 82 abgehoben, so daß das Druckmedium aus der ersten Einsenkung 103 in die nächste Einsenkung 103 abfließen kann, so wie dies auch bereits in Figur 5 dargestellt und in der Beschreibung hierzu deutlich gemacht wurde. In der nächsten Einsenkung 103 kann nunmehr das Druckmedium über die Bohrungen 95 und 94 bis zu den Mündungen 101 und 102 fließen und dort in der zugehörigen Kammer 106 die Membran anheben, sofern dort über die Anschlüsse 120 und 121 keine zu große Druckbeaufschlagung vorliegt. Das Druckmedium kann dann über die Mündung 78 in den jeweiligen Auslaßkanal 72 eintreten und die zugeordnete Kammer 39 füllen. Hierdurch steigt im gesamten System wiederum der Druck, so daß in der zugeordneten Einsenkung 103 erneut die Membran 82 angehoben wird, wodurch das Druckmedium wiederum zur nächsten Einsenkung 103 weiterfließt und dort über die Mündungen 99 und 100 wiederum in die zugeordneten Bohrungen 94 und 95 eintritt, dort auf der Unterseite wiederum über die Mündungen 101 und 102 in der zugeordneten Kammer 106 die zugehörige Membran 83 anhebt und dadurch wieder über die Mündungen 78 in den Auslaßkanal 72 einströmen kann.
Zur Entleerung aller Kammern 39 muß jetzt lediglich der Druck in den Kammern, die über die Anschlüsse 117 und 119 versorgt werden, abgesenkt werden, so daß Druckmedium aus den Kammern 39 jeweils an den Mündungen 77 die zugeordnete Membran 82 anheben und dadurch die Mündung 90 erreichen und in diese eintreten kann. Das Druckmedium kann dann über den Entleerungskanal 86 und dessen Auslaßmündung 88 z.B. in die Umgebungsatmosphäre abfließen.

### Liste der verwendeten Bezugszeichen

- 1-38: unbenutzt
- 39: Kammer
- 40-71: unbenutzt
- 72: Auslaßkanal
- 73: Auslaßkanal
- 74: Ventilgehäuseplatte
- 75: Ventilgehäuseplatte
- 76: Mündung
- 77: Mündung
- 78: Mündung
- 79: Mündung
- 80: Mündung
- 81: Mündung
- 82: Membran
- 83: Membran
- 84: Membran
- 85: Membran
- 86: Entleerungskanal
- 87: Entleerungskanal
- 88: Auslaßmündung
- 89: Auslaßmündung
- 90: weitere Mündung
- 91: weitere Mündung
- 92: Einlaßleitung
- 93: Einlaßleitung
- 94: Bohrung
- 95: Bohrung
- 96: Zwischenlage
- 97: Zwischenlage
- 98: Zwischenlage
- 99: Mündung
- 100: Mündung
- 101: Mündung
- 102: Mündung
- 103: Einsenkung
- 104: Zwischensteg
- 105: Quersteg
- 106: Kammer
- 107: Einsenkung
- 108: Bohrung
- 109: Deckel
- 110: Leitung
- 111: Deckel
- 112: Leitung
- 113: Pfeil
- 114: Zwischenlage
- 115: Deckel
- 116: Deckel
- 117: Anschluß
- 118: Anschluß
- 119: Anschluß
- 120: Anschluß
- 121: Anschluß
- 122: unbenutzt
- 123: unbenutzt
- 124: Zwischensteg
- 125: Quersteg

## Patentansprüche

1. Ventil zum successiven Auffüllen von einzelnen Kammern mit einem Fluid, mit einer Ventilgehäuseplatte (74,75) mit Kanälen und Kanalmündungen in Oberflächenseiten der Ventilgehäuseplatte (74,75) sowie mit mindestens zwei elastischen Membranen (82,83,84,85) zum Abdecken von Kanalmündungen, wobei jede elastische Membran auf ihrer den Mündungen abgewandten Seite mit einem Steuerdruck beaufschlagbar ist, wobei mindestens ein Auslaßkanal (72,73) vorgesehen ist und wobei noch verbleibende weitere Mündungen weiterer Auslaßkanäle ebenfalls über die mit einem Steuerdruck beaufschlagbare Membran mit einer Einlaßleitung bzw. mit einer benachbarten Mündung verbindbar ist, dadurch gekennzeichnet, daß jeder Auslaßkanal (72,73) drei an je einer anderen Oberflächenseite der Ventilgehäuseplatte (74,75) austretende Mündungen (76,77,78;79,80,81) aufweist, von denen je eine (76; 79) an zu befüllende und zu entleerende Kammern (39) anschließbar ist, während die weiteren Mündungen (77,78; 80,81) jeweils von der elastischen Membran (82,83; 84,85) abgedeckt werden und daß weiter mindestens ein Entleerungskanal (86,87) vorgesehen ist mit einer Auslaßmündung (88; 89) und einer weiteren Mündung (90,91), wobei jede dieser weiteren Mündungen (36; 90,91) und je Auslaßkanal eine weitere Mündung (77; 81) von der gemeinsamen Membran (82,85) überdeckt werden.

2. Ventil nach Anspruch 1, dadurch gekennzeichnet, daß eine (77) der zwei nicht an eine zu befüllende und zu entleerende Kammer (39) anschließbaren Mündungen (77,78) jedes Auslaßkanals (72,73) und eine weitere Mündung (90,91) eines Entleerungskanals (86,87) in der gleichen Oberflächenseite der Ventilgehäuseplatte (74,75) münden, wobei ein diese Mündungen überdeckender Ventildeckel (115,119) vorgesehen ist, zur Einklemmung der die Mündungen überdeckenden Membran (82,85) mit mindestens einem äußeren, umlaufenden, an einer Zwischenlage (96,97,98,114) ausgebildeten Dichtsteg zwischen diesem und der Membran (82,85).

3. Ventil nach Anspruch 1 oder 2, dadurch gekennzeichnet, daß die Dichtstege als Zwischenlage (96,97,98,114) ausgebildet sind.

4. Ventil nach einem der Ansprüche 1 bis 3, dadurch gekennzeichnet, daß die Zwischenlage (96,97,98,114) einstückig und aus Papier, Pappe, Kunststoff, Gummi oder Leder geformt ist.

5. Ventil nach einem der Ansprüche 1 bis 4, dadurch gekennzeichnet, daß Gehäuseplatte (74,75) und Deckel (109,111,115,116) aus Kunststoff bestehen.

6. Ventil nach einem der Ansprüche 1 bis 5, dadurch gekennzeichnet, daß die Mündungen (80,99,100) Einsenkungen (103,107) aufweisen.

7. Ventil nach Anspruch 1, dadurch gekennzeichnet, daß die zwei nicht an eine zu befüllende und zu entleerende Kammer (39) anschließbaren Mündungen (77,78; 80,81) jedes Auslaßkanals (72,73) an zwei sich gegenüberliegenden Oberflächenseiten der Ventilgehäuseplatte (74,75) münden, während die dritte Mündung (76,79) in einer Seitenfläche der Ventilgehäuseplatte (74,75) mündet, wobei eine der Mündungen (77,81) jedes Auslaßkanals (72,73) mit einer Mündung (90,91) jedes Entleerungskanals (86,87) in einer gemeinsamen Oberflächenseite münden und daß die genannten sich gegenüberliegenden Oberflächenseiten je von einem Ventildeckel abgedeckt werden zur Einklemmung einer diese Seiten ebenfalls abdeckenden Membran (82,85) mit mindestens einem äußeren umlaufenden Dichtsteg zwischen dem Deckel und der Membran.

8. Ventil nach Anspruch 7, dadurch gekennzeichnet, daß die Auslaßmündung (88) jedes Entleerungskanals auf der gleichen Oberflächenseite mündet wie die Mündung (76) eines zugeordneten Auslaßkanals (72).

9. Ventil nach Anspruch 8, dadurch gekennzeichnet, daß die Auslaßkanäle (72) und die Entleerungskanäle (86) und deren Mündungen (76-78; 88,90) doppelt in spiegelbildlicher Anordung vorhanden sind, wobei zwischen den beiden Anordnungen eine Doppelreihe durchgehender Bohrungen (94,95) vorgesehen ist, die in ihrer Bohrungsanzahl mindestens der Zahl der Auslaßkanäle (72) entspricht, wobei mindesten ein erstes Bohrungspaar (94,95) mit einer Einlaßleitung (92) verbunden ist und daß auf der einen Oberflächenseite der Ventilgehäuseplatte (74) jeweils die Mündungen (90,77) der Auslaß- und der Entleerungskanäle von den Mündungen (99,100) der Bohrungen (94,95) durch einen Zwischensteg (104) bzw. (105) getrennt sind, während auf der gegenüberliegenden Oberflächenseite ein Zwischensteg (104) die Mündungen (78,101) bzw. (78,102) der spiegelbildlichen Anordnung der Kanäle voneinander trennt, wobei dort jeweils ein Zwischensteg (104) zusammen mit einem Teilstück des umlaufenden Dichtstegs und einem Paar Querstege (105) jeweils für ein Mündungspaar (78,101) bzw. (78,102) eine mit Steuerdruck beaufschlagbare Kammer (106) bildet.

## Claims

1. Valve for the successive filling up of individual chambers with a fluid, comprising a valve housing plate (74, 75) having channels and channel ports in the outside faces of the valve housing plate (74, 75), and also comprising at least two elastic membranes (82, 83, 84, 85) for the covering of channel ports, wherein each elastic membrane can be subjected to a control pressure on its side remote from the ports, wherein at least one outlet channel (72, 73) is provided, and wherein any remaining further ports of further outlet channels can be connected to an inlet conduit or to an adjacent port by means again of the membrane which is arranged to be subjected to a control pressure, characterised in that each outlet channel (72, 73) has three ports (76, 77, 78; 79, 80, 81) which exit each at a different surface of the valve housing plate (74, 75), wherein for each channel one of these ports (76; 79) is connectable to chambers (39) to be filled and to be emptied, while the other ports (77, 78; 80, 81) are each covered by the elastic membranes (82, 83; 84, 85), and that additionally at least one exhaust channel (86, 87) is provided having an outlet port (88; 89) and a further port (90, 91), wherein each of these further ports (36; 90, 91) and, for each outlet channel, one of said other ports (77; 81) are covered by the common membrane (82, 85).

2. Valve according to claim 1, characterised in that one (77) of the two ports (77, 78) of each outlet channel (72, 73) which is not connectable to a chamber (39) which is to be filled and to be emptied, and a further port (90, 91) of an exhaust channel (86, 87), issue at the same outside surface of the valve housing plate (74, 75), wherein a valve cover (115, 119) is provided covering these ports, for the clamping of the membrane (82, 85) covering the ports by means of at least one outer, rotating sealing insert formed at an intermediate layer (96, 97, 98, 114) between the valve cover and the membrane (82, 85).

3. Valve according to claim 1 or 2, characterised in that the sealing inserts are formed as intermediate layers (96, 97, 98, 114).

4. Valve according to one of claims 1 to 3, characterised in that the intermediate layer (96, 97, 98, 114) is in one piece and is of paper, card, plastics material, rubber or leather.

5. Valve according to one of claims 1 to 4, characterised in that housing plate (74, 75) and cover (109, 111, 115, 116) are of plastics material.

6. Valve according to one of claims 1 to 5, characterised in that the ports (80, 99, 100) are in recesses (103, 107).

7. Valve according to claim 1, characterised in that the two ports (77, 78; 80, 81) of each outlet channel (72, 73) which are not connected to a chamber (39) to be filled and to be emptied issue at two opposite faces of the valve housing plate (74, 75), while the third port (76, 79) issues at a side face of the valve housing plate (74, 75), wherein one of the ports (77, 81) of each outlet channel (72, 73) issues together with a port (90, 91) of each exhaust channel (86, 87) at a common surface, and in that the said opposed surfaces are each covered by a valve cover for the clamping of a membrane (82, 85) covering these faces by means of at least one external, rotating sealing insert between the valve cover and the membrane.

8. Valve according to claim 7, characterised in that the outlet port (88) of each exhaust channel issues at the same surface as the port (76) of an associated outlet channel (72).

9. Valve according to claim 8, characterised in that the outlet channels (72) and the exhaust channels (86) and their ports (76-78; 88, 90) are provided in a double, mirror-image array, wherein a double row of through bores (94, 95) is provided between the two arrays, with the bores corresponding in number to at least the number of the outlet channels (72), wherein at least one first pair of bores (94, 95) is connected with an inlet conduit (92), and that on the one surface of the valve housing plate (74) the respective ports (90, 77) of the outlet channels and of the exhaust channels are separated from the ports (99, 100) of the bores (94, 95) by an intermediate insert (104) or (105), while on the opposite surface an intermediate insert (104) separates the ports (78, 101) and (78, 102) of the mirror-image arrays of the channels from one another, wherein there an intermediate web (104) together with a portion of the rotating sealing insert and a pair of transverse inserts (105) for a pair of ports (78, 101) and (78, 102) form a chamber (106) which can be subjected to control pressure.

## Revendications

1. Soupape pour remplir successivement des chambres individuelles à l'aide d'un fluide, comportant une plaque formant cage de soupape (74, 75) pourvue de canaux et d'ouvertures de canaux prévus dans les côtés de la surface de la plaque (74, 75), et au moins deux membranes élastiques (82, 83, 84, 85) pour couvrir les ouvertures de canaux, étant précisé que chaque membrane élastique est apte à être sollicitée sur sa face opposée aux ouvertures par une pression de commande, qu'il est prévu au moins un canal de sortie (72, 73) et que d'autres ouvertures restantes d'autres canaux de sortie peuvent également être reliées à une conduite d'entrée ou à une ouverture voisine par l'intermédiaire de la membrane apte à être sollicitée par une pression de commande, caractérisée en ce que chaque canal de sortie (72, 73) comporte trois ouvertures (76, 77, 78 ; 79, 80, 81) qui débouchent au niveau de trois côtés de la surface de la plaque formant cage de soupape (74, 75) et dont une (76 ; 79) peut être raccordée à chaque fois à des chambres (39) à remplir et à vider, tandis que les autres ouvertures (77, 78 ; 80, 81) sont couvertes par les membranes élastiques respectives (82, 83 ; 84, 85), et en ce qu'il est aussi prévu au moins un canal d'évacuation (86, 87) présentant une ouverture de sortie (88 ; 89) et une autre ouverture (90, 91), chacune de ces autres ouvertures (36 ; 90, 91) et une autre ouverture (77 ; 81) d'un canal de sortie étant couvertes par la membrane commune (82, 85).

2. Soupape selon la revendication 1, caractérisée en ce que l'une (77) des deux ouvertures (77, 78) de chaque canal de sortie (72, 73) qui ne sont pas aptes à être raccordées à une chambre (39) à remplir et à vider, et une autre ouverture (90, 91) d'un canal d'évacuation (86, 87) débouchent sur le même côté de la surface de la plaque formant cage de soupape (74, 75), étant précisé qu'il est prévu un couvercle de soupape (115, 119) qui couvre ces ouvertures en vue du serrage de la membrane (82, 85) couvrant les ouvertures, avec au moins un rebord d'étanchéité extérieur circulaire formé au niveau d'une pièce intermédiaire (96, 97, 98, 114), entre ce rebord et la membrane (82, 85).

3. Soupape selon la revendication 1 ou 2, caractérisée en ce que les rebords d'étanchéité sont conçus comme des pièces intermédiaires (96, 97, 98, 114).

4. Soupape selon l'une des revendications 1 à 3, caractérisée en ce que la pièce intermédiaire (96, 97, 98, 114) est réalisée d'une seule pièce et est formée à partir de papier, de carton, de matière plastique, de caoutchouc ou de cuir.

5. Soupape selon l'une des revendications 1 à 4, caractérisée en ce que la plaque formant cage (74, 75) et le couvercle (109, 111, 115, 116) se composent de matière plastique.

6. Soupape selon l'une des revendications 1 à 5, caractérisée en ce que les ouvertures (80, 99, 100) présentent des creux (103, 107).

7. Soupape selon la revendication 1, caractérisée en ce que les deux ouvertures (77, 78 ; 80, 81) de chaque canal de sortie (72, 73) qui ne sont pas aptes à être raccordées à une chambre (39) à remplir et à vider débouchent au niveau de deux côtés opposés de la surface de la plaque formant cage de soupape (74, 75), tandis que la troisième ouverture (76, 79) débouche dans une surface latérale de ladite plaque (74, 75), étant précisé que l'une des ouvertures (77, 81) de chaque canal de sortie (72, 73) et une ouverture (90, 91) de chaque canal d'évacuation (86, 87) débouchent dans un côté commun de la surface, et en ce que lesdits côtés opposés de la surface sont couverts chacun par un couvercle de soupape en vue du serrage d'une membrane (82, 85) couvrant également ces côtés, avec au moins un rebord d'étanchéité extérieur circulaire, entre le couvercle et la membrane.

8. Soupape selon la revendication 7, caractérisée en ce que l'ouverture de sortie (88) de chaque canal d'évacuation débouche sur le même côté de la surface que l'ouverture (76) d'un canal de sortie associé (72).

9. Soupape selon la revendication 8, caractérisée en ce que les canaux de sortie (72), les canaux d'évacuation (86) et leurs ouvertures (76-78 ; 88, 90) sont prévus en double, en séries symétriques, étant précisé qu'il est prévu, entre les deux séries, une double rangée de perçages traversants (94, 95) dont le nombre correspond au moins au nombre de canaux de sortie (72), au moins une première paire de perçages (94, 95) étant reliée à une conduite d'entrée (92), et en ce que sur un côté de la surface de la plaque formant cage de soupape (74), les ouvertures (90, 77) des canaux de sortie et d'évacuation sont séparées des ouvertures (99, 100) des perçages (94, 95) par une barre intermédiaire (respectivement 104 et 105), tandis que sur le côté opposé de la surface, une barre intermédiaire (104) sépare les unes des autres les ouvertures (78, 101) et (78, 102) de la série symétrique de canaux, étant précisé qu'une barre intermédiaire (104) forme, avec une partie du rebord d'étanchéité circulaire et une paire de barres transversales (105), pour une paire d'ouvertures (78, 101) et (78, 102), une chambre (106) apte à être sollicitée par une pression de commande.
